Europäisches Patentamt

European Patent Office

Office européen des brevets

(19)

(11) Numéro de publication : **0 328 447 B1**

(12)   **FASCICULE DE BREVET EUROPEEN**

(45) Date de publication du fascicule du brevet :
22.01.92 Bulletin 92/04

(51) Int. Cl.⁵ : **G21C 15/02, G21C 17/10**

(21) Numéro de dépôt : 89400339.1

(22) Date de dépôt : 07.02.89

(54) Equipements internes inférieurs de réacteur nucléaire.

(30) Priorité : 11.02.88 FR 8801646

(43) Date de publication de la demande :
16.08.89 Bulletin 89/33

(45) Mention de la délivrance du brevet :
22.01.92 Bulletin 92/04

(84) Etats contractants désignés :
BE CH DE ES GB LI SE

(56) Documents cités :
EP-A- 0 238 390
FR-A- 2 592 982
GB-A- 2 015 778

(73) Titulaire : **FRAMATOME**
**Tour Fiat 1, Place de la Coupole**
**F-92400 Courbevoie (FR)**

(72) Inventeur : **Chevereau, Gérard**
**84 Avenue Thiers**
**F-93340 Le Raincy (FR)**
Inventeur : **Babin, Michel**
**148, Avenue Jean Jaurès**
**F-93500 Pantin (FR)**

(74) Mandataire : **Fort, Jacques et al**
**CABINET PLASSERAUD 84, rue d'Amsterdam**
**F-75009 Paris (FR)**

## Description

L'invention concerne les équipements internes inférieurs de réacteur nucléaire et trouve une application particulièrement importante dans le cas des réacteurs nucléaires à eau sous pression dits PWR.

L'invention est également applicable à d'autres réacteurs, notamment aux réacteurs du type comprenant une cuve de résistance à la pression d'un réfrigérant et comprenant un coeur constitué d'assemblages combustibles porté par une plaque support inférieure percée de passages pour le réfrigérant ascendant, une calandre délimitant une enceinte interposée entre ladite plaque support et le fond de la cuve, ladite calandre étant constituée par une paroi et des conduits d'amenée de réfrigérant vers les passages à travers la paroi et l'enceinte et étant traversée par des tubes-guides de doigts de gant de sonde d'instrumentation du coeur pénétrant dans le coeur.

On connaît déjà différents types d'équipements internes inférieurs de réacteur nucléaire. Le document EP-A-0238390 correspondant au FR-A-2595501 décrit des équipements internes inférieurs montrant une architecture du type décrit ci-dessus.

Cette solution est satisfaisante mais la répartition des tubes-guides de doigts de gant de sonde d'instrumentation dans l'enceinte placée en fond de cuve du réacteur est complexe lorsque le nombre de conduits d'amenée de réfrigérant est élevé.

L'invention vise à fournir des équipements internes inférieurs de réacteur répondant mieux aux exigences de la pratique, notamment en ce qu'ils facilitent cette répartition respective des réseaux de tubes-guides de doigts de gant et de conduits d'amenée de réfrigérant. Elle vise au surplus à réduire la perte de charge subie par le réfrigérant en amont du coeur, notamment dans les conduits d'amenée du réfrigérant et du fait du brusque changement de direction du réfrigérant autour du coeur.

Dans ce but l'invention propose des équipements internes inférieurs de réacteur nucléaire du type ci-dessus défini, caractérisés en ce qu'ils comprennent de plus une plaque de séparation fixée à la calandre, située au-dessous de la plaque support de coeur, pour délimiter avec ladite plaque support une chambre de répartition, ladite plaque de séparation étant percée de trous reliés aux conduits d'amenée du réfrigérant et étant fixée à la plaque support inférieure du coeur par des moyens de liaison mécanique répartis à la périphérie de la plaque de séparation et délimitant entre eux des passages d'accès du réfrigérant vers l'intérieur de ladite chambre.

On voit que l'invention permet d'arriver à :
— une meilleure répartition des réseaux respectifs de tubes-guides de doigts de gant et de conduits de passage d'amenée du réfrigérant vers le coeur à l'intérieur de la calandre des équipements internes inférieurs,
— une meilleure alimentation en réfrigérant des assemblages du coeur situés à la périphérie de ce dernier,
— une construction de calandre plus facile.

Dans un mode de réalisation avantageux, les moyens de liaison mécanique sont constitués par des barreaux profilés pour limiter les pertes de charge du réfrigérant ; ces barreaux peuvent permettre la fixation et la protection des tubes-guides par rapport audit réfrigérant avant leur pénétration dans l'enceinte.

Les conduits d'amenée du réfrigérant au travers de l'enceinte vers la chambre de répartition peuvent par ailleurs avantageusement être espacés les uns des autres d'une distance égale à environ 1,5 fois la distance séparant les axes de deux assemblages combustibles adjacents.

L'invention sera mieux comprise à la lecture de la description qui suit d'un mode particulier de réalisation donné à titre d'exemple non limitatif. La description se réfère aux dessins qui l'accompagnent dans lesquels :
— la Figure 1 est un plan d'ensemble vu en coupe d'un réacteur muni d'équipements internes inférieurs selon l'invention ;
— la Figure 2 est un agrandissement des équipements internes inférieurs selon l'invention ;
— la Figure 3 montre un barreau utilisé dans un mode de réalisation avantageux de l'invention ;
— la Figure 4 est une vue en coupe selon IV-IV de la Figure 3 ;
— la Figure 5 est une vue partielle schématique et par en-dessous du cheminement des tubes-guides sous la plaque de séparation associée à la plaque support du coeur,
— la Figure 6 est une vue en coupe d'un manchon de protection de doigts de gant dans un mode de réalisation avantageux de l'invention ;
— la Figure 7 est une vue suivant la flèche F de la Figure 6 ;
— la Figure 8 est une coupe suivant VIII-VIII de l'embase de la Figure 6.

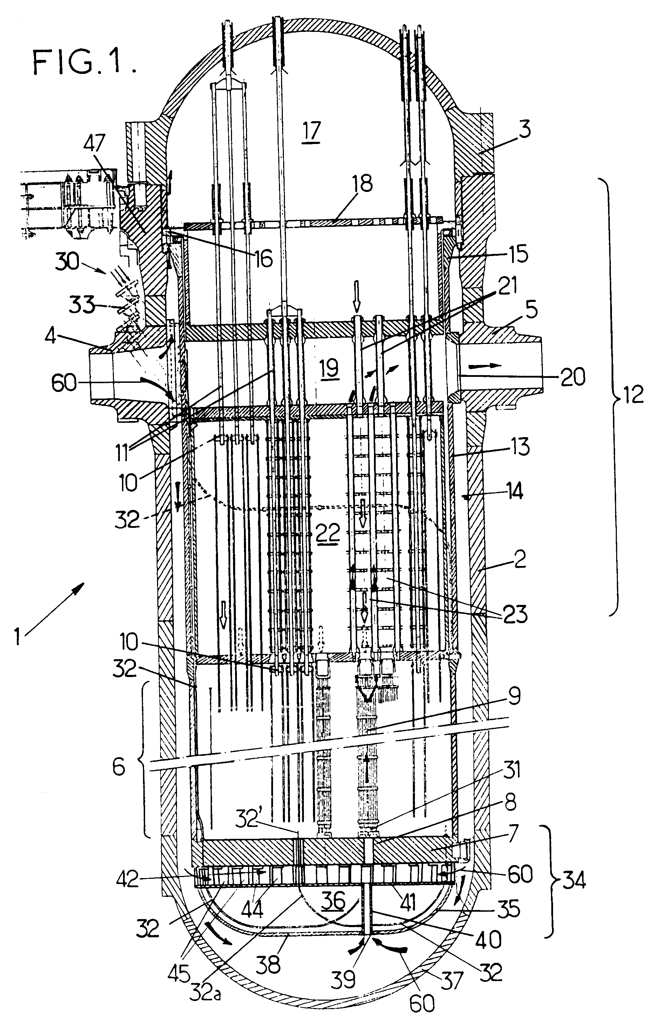

La Figure 1 montre un réacteur à eau pressurisée 1 comprenant une cuve 2 de résistance à la pression d'un réfrigérant, fermée par un couvercle amovible 3 et comportant des tubulures d'entrée 4 du réfrigérant et des tubulures de sortie 5 du réfrigérant, un coeur 6 muni d'une plaque support inférieure 7 percée de trous de passage 8 pour permettre le passage du réfrigérant de bas en haut dans les assemblages combustibles 9 et des grappes de contrôle 10 actionnées par des tiges de commande 11 au travers du couvercle 3 du réacteur 1.

Le réacteur comporte également des équipements internes supérieurs 12 interposés entre le coeur 6 et le couvercle 3. Une enveloppe externe cylindrique 13, espacée de la surface intérieure 14 de la cuve 2 et munie d'une collerette de bride supérieure 15 permettant de la suspendre par pincement entre le couvercle 3 et la cuve 2, permet de canaliser le flux du réfrigérant entrant par les tubulures 4 en les dirigeant le long de la surface intérieure 14 de la cuve 2 pour pénétrer dans le coeur 6 par la partie basse des assemblages 9.

Des moyens de passage 16 au niveau de la collerette 15 sont ménagés pour dériver un débit de fluide réfrigérant, très faible par rapport au débit total de l'arrivée par l'entrée 4 au volume 17 délimité, d'une part, par le couvercle 3 du réacteur et, d'autre part, par la partie haute 18 des équipements internes supérieurs 12 du réacteur.

Un ensemble de collection 19 du réfrigérant permet de conduire transversalement le réfrigérant sortant du coeur vers les circuits de récupération des calories, extérieurs au réacteur (non représentés) par les tubulures de sortie 5 après avoir traversé l'enveloppe cylindrique 13 par des trous 20 disposés au droit desdites tubulures de sortie 5.

Des tubes de guidage 21 permettent le passage des tiges de commande 11 des grappes 10 au travers de cet ensemble 19, et ce à l'abri des turbulences du flux réfrigérant.

Les équipements internes supérieurs 12 comprennent encore un dispositif de séparation de débit 22 muni de guides 23 des grappes 10 et des tiges de commande 11. Ce dispositif est placé entre le coeur 6 et l'ensemble de collection 19.

On ne décrira pas plus précisément les équipements internes supérieurs 12 d'un réacteur auquel est applicable l'invention, un exemple de réalisation de tels équipements étant par exemple décrit dans le document EP.A.0238390 auquel on pourra se reporter.

Le réacteur comporte par ailleurs un dispositif de guidage 30 de sondes d'instrumentation du coeur pénétrant dans le coeur par la partie inférieure 31 des assemblages combustibles 9. Ce dispositif comprend des tubes-guides 32 destinés chacun à livrer passage à au moins un doigt de gant 62 de sonde de mesure de flux du rayonnement.

Ces tubes-guides 32 pénétrent dans la cuve 2 du réacteur 1 par des fourreaux 33 de traversée étanches, figurant en pointillé sur la Figure 1 ; ils sont également décrits dans le document EP-A 0238390 mentionné ci-dessus. Ces fourreaux 33 sont situés au-dessus du niveau des tubulures d'entrée 4 et de sortie 5 du réfrigérant.

Les tubes 32 cheminent ensuite jusqu'au-dessous de la plaque inférieure du coeur 7 le long de l'enveloppe externe 13 qui les supporte, entre le dispositif 22 et l'enveloppe. Les tubes-guides 32 se répartissent ainsi transversalement à l'abri des turbulences qui règnent dans le dispositif de séparation des débits 22.

Selon une variante les tubes 32 cheminent au droit du coeur à l'extérieur de l'enveloppe externe 13. Ils sont dans ce cas protégés des turbulences du débit d'eau descendant par des plaques rapportées à l'extérieur de l'enveloppe externe 13.

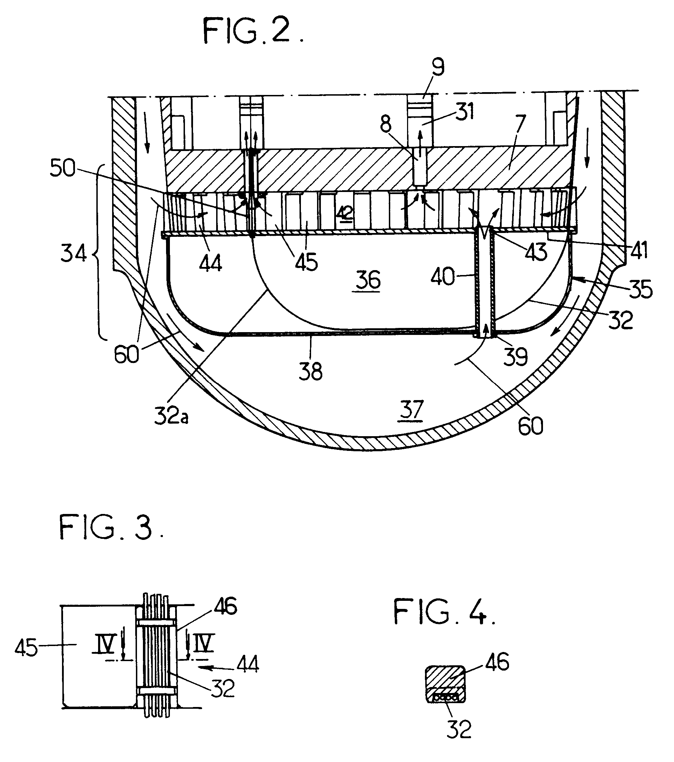

Une nouvelle répartition transversale est effectuée ensuite afin de distribuer les sondes vers les assemblages 9 à travers les équipements internes inférieurs 34 décrits ci-après et montrés plus précisément sur la Figure 2.

Afin de permettre le retrait et l'engagement d'un doigt de gant de sonde de mesure de flux de rayonnement à partir de l'extérieur du réacteur, les tubes-guides 32 ont des rayons de courbure suffisants pour éviter les coincements.

Les équipements internes inférieurs 34 comprennent une calandre 35 délimitant une enceinte 36 interposée entre la plaque support de coeur 7 et la partie basse du volume délimité par la cuve. La calandre 35 est constituée par une paroi 38 percée de trous 39 et par des conduits 40 d'amenée du réfrigérant vers des passages 8 percés dans la plaque support 7 (dont un seul est montré sur les Figures 1 et 2). Elle est traversée par la partie terminale 32a des tubes-guides 32 de doigts de gant de sonde d'instrumentation de coeur.

Les équipements internes inférieurs 34 comportent de plus une plaque de séparation 41 fixée à la paroi 38 au-dessous de la plaque support de coeur 7 délimitant avec ladite plaque support une chambre 42 de répartition. La plaque de séparation 41 est percée de trous 43 reliés aux conduits 40 d'amenée du réfrigérant et est fixée à la plaque support inférieure 7 du coeur par des moyens de liaison mécaniques 44 répartis à la périphérie de la plaque de séparation et délimitant entre eux des passages 45 d'entrée du réfrigérant dans la chambre 42.

Sur les Figures 3 et 4 on a représenté un mode de réalisation avantageux de ces moyens de liaison mécanique 44. Il s'agit de barreaux 46 profilés pour limiter les pertes de charge du réfrigérant et permettre la fixation de tubes-guides 32, par exemple au nombre de quatre par barreau, avant leur introduction ou pénétration dans l'enceinte 36.

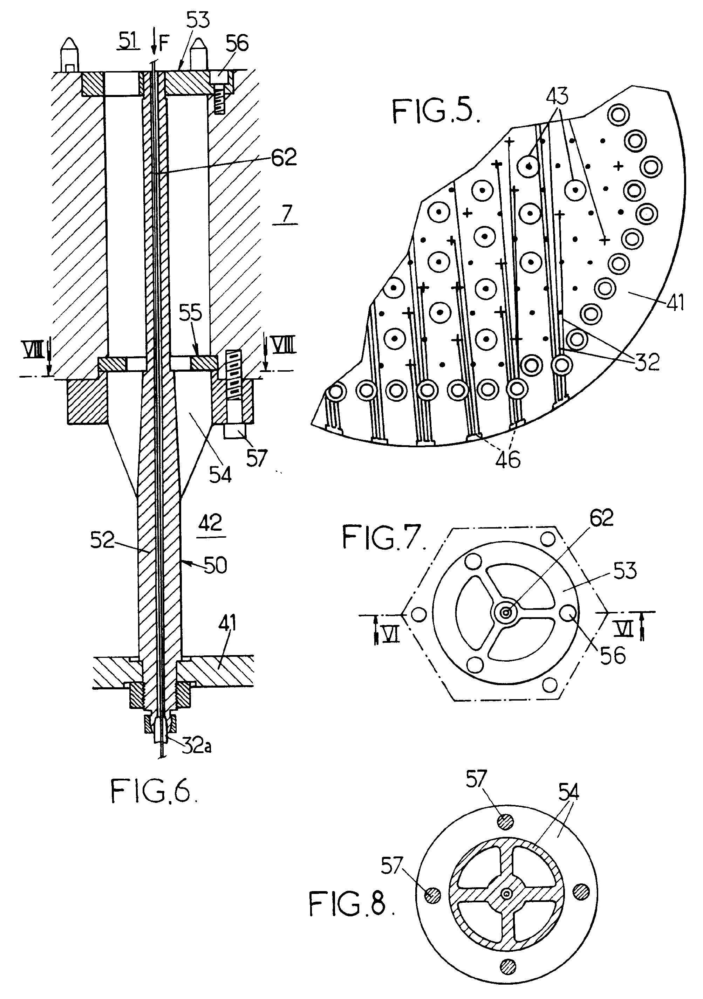

La Figure 5 montre schématiquement et en vue partielle par en-dessous une répartition possible des cheminements des conduits de guidage 32 des doigts de gant 62 vers les assemblages et de leurs parties terminales 32a à partir des barreaux 46.

Dans certains cas, au moins certains des tubes-guides 32 sont fixés sur les conduits de passage 40 à l'intérieur de l'enceinte 36.

Sur la Figure 6 on a représenté une vue en coupe d'un manchon 50 de protection et de passage de doigts de gant 62 à travers la chambre 42 vers l'assemblage destiné à le recevoir et situé en 51 au-dessus du manchon 50 que traverse également la plaque support de coeur. Le manchon 50 est fixé à la partie terminale 32a du tube guide 32, par exemple par soudure. Chaque manchon comporte une conduite 52, une entretoise 53, par exemple en forme d'étoile comme représentée sur la Figure 7, et une embase 54, par exemple à section sensiblement cruciforme, comme représentée sur la coupe de la Figure 8. L'entretoise est destinée à centrer la conduite 52 en face du logement interne de l'assemblage destiné à recevoir le doigt de gant de sonde d'instrumentation. L'embase 54 doit laisser passer du réfrigérant vers l'assemblage. Le manchon de protection peut comporter de plus un diaphragme 55 de réglage du débit du réfrigérant enserré entre l'embase 54 et la plaque support du coeur 7. L'entretoise 53 et l'embase 54 sont rendues solidaires de la plaque support de coeur 7 par des moyens de fixation 56, 57 connus, par exemple par des vis.

Le fonctionnement normal du réacteur nucléaire comprenant les équipements internes inférieurs tels que décrits est explicité ci-après. Des flèches noires 60 en traits pleins indiquent sur les Figures 1 et 2 le trajet suivi par le flux principal du réfrigérant, en partie basse du réacteur notamment.

Le réfrigérant froid entre dans le réacteur 1 par le tube d'entrée 4. Il est dévié par l'enveloppe extérieure 13, dans sa grande majorité, vers le bas du réacteur où il pénètre dans la chambre de répartition 42, d'une part, directement par les trous de passage 45 et, d'autre part, par les conduits 40 de la calandre. Le réfrigérant passe ensuite de la chambre 42 dans les assemblages 9 via les trous 8 percés dans la plaque support de coeur 7 et le long des manchons de protection 50 pour les assemblages munis d'une sonde. Le réfrigérant suit ensuite le trajet habituel au travers des assemblages 9 du coeur du réacteur.

Grâce au dispositif de l'invention, les doigts de gant de sonde de mesure de flux sont parfaitement guidés sans risque de détérioration et à l'abri des turbulences du réfrigérant jusqu 'au coeur de l'assemblage.

## Revendications

1. Equipements internes inférieurs (34) de réacteur nucléaire (1) comprenant une cuve (2) de résistance à la pression d'un réfrigérant et comprenant un coeur (6) constitué d'assemblages combustibles (9) portés par une plaque support inférieure (7) percée de trous de passage (8) pour le réfrigérant ascendant, une calandre (35) délimitant une enceinte (36) interposée entre ladite plaque support (7) et le fond de cuve (37), ladite calandre (35) étant constituée par une paroi (38), des conduits (40) d'amenée de réfrigérant vers les trous de passage (8) à travers la paroi (38) et l'enceinte (36) et étant traversée par des tubes-guides (32) de doigts de gant (62) de sonde d'instrumentation du coeur pénétrant dans le coeur à travers la plaque support (7) dudit coeur, caractérisés en ce qu'ils comprennent de plus une plaque de séparation (41) fixée à la paroi (38) au-dessous de la plaque support (7) de coeur pour délimiter avec ladite plaque support une chambre (42) de répartition ; ladite plaque de séparation (41) étant percée de trous (43) reliés au conduit (40) d'amenée du réfrigérant et étant fixée à la plaque support inférieure (7) du coeur par des moyens de liaison mécanique (44) répartis à la périphérie de la plaque de séparation (41) et délimitant entre eux des passages d'accès (45) du réfrigérant vers l'intérieur de ladite chambre (42).

2. Equipements internes inférieurs selon la revendication 1, caractérisés en ce que les moyens de liaison mécanique (44) sont constitués par des barreaux (50) profilés pour limiter les pertes de charge du réfrigérant et permettre la fixation et la protection des tubes-guides (32) par rapport au dit réfrigérant avant leur pénétration dans l'enceinte (36).

3. Equipements internes inférieurs selon l'une quelconque des revendications précédentes, caractérisés en ce que les conduits (40) d'amenée du réfrigérant au travers de l'enceinte vers la chambre de répartition (42) sont espacés les uns des autres d'une distance égale à 1,5 fois la distance séparant les axes de deux assemblages combustibles (9) adjacents.

4. Equipements internes inférieurs selon l'une quelconque des revendications précédentes, caractérisés en ce qu' au moins certains des tubes-guides (32) sont fixés sur les conduits (40) d'amenée du réfrigérant à l'intérieur de l'enceinte (36).

5. Equipements internes inférieurs selon l'une quelconque des revendications précédentes, caractérisés en ce que la chambre de répartition (42) comprend des manchons (50) de protection des doigts de gant (62) sortant de l'enceinte (36) via les tubes-guides (32) propres à recevoir et guider ledits doigts de gant jusqu'à leur pénétration dans le coeur (6) par les trous de passage (8) de ladite plaque support de coeur.

6. Equipements internes inférieurs selon la revendication 5, caractérisés en ce que chaque manchon (50) de protection comprend une conduite (52) propre à recevoir au moins un doigt de gant, des moyens de centrage (53, 54) destinés à centrer ladite conduite dans le trou de passage (8) du réfrigérant vers un assemblage de façon que cette conduite soit en face d'un logement de doigt de gant prévu dans ledit assemblage.

7. Equipements internes inférieurs selon la revendication 6, caractérisés en ce que les moyens de centrage comportent une embase (53) fixée à la plaque support (7) de coeur et une entretoise (54) fixée en partie basse de la plaque support (7) de coeur et de section sensiblement cruciforme.

8. Equipements internes inférieurs selon l'une des revendications 6 ou 7, caractérisés en ce que au moins un manchon (50) de protection comporte de plus un diaphragme (55) de règlage de débit du réfrigérant inséré entre l'embase (54) et la plaque support (7) de coeur.

## Patentansprüche

1. Untere Einbauten (34) eines Kernreaktors (1) mit einem Kühlmitteldruckgefäß (2), das einen Kern (6), der aus Kernbrennelementen (9) gebildet ist, die mittels einer mit Durchgangslöchern (8) für ein aufsteigendes Kühlmittel versehenen unteren Trägerplatte (7) gehalten sind, und eine Zwischenwandung (35) aufweist, die einen zwischen der Trägerplatte (7) und dem Gefäßboden (37) angeordneten Raum (36) begrenzt und die (35) aus einer Wand (38) und Kühlmittelzuführleitungen (40) zum Zuführen des Kühlmittels zu den Durchgangslöchern (8) durch die Wand (38) und den Raum (36) gebildet ist, wobei die Zwischenwandung von Führungsrohren (32) für Handschuhfinger (62) einer von Kern-Gerätesonden, die in den Kern durch die Trägerplatte (7) des Kerns eindringen, durchdrungen ist, **dadurch gekennzeichnet,** daß die unteren Einbauten (34) eine weitere Trennplatte (41) aufweisen, die an der Wandung (38) unterhalb der Trägerplatte (7) des Kerns zum Begrenzen einer Aufteilkammer (42) zusammen mit der Trägerplatte befestigt ist, wobei die Trennplatte (41) mit Löchern (43) versehen ist, die mit der Kühlmittelzuführungsleitung (40) verbunden sind, und an der unteren Trägerplatte (7) des Kerns mittels mechanischer Verbindungen (44), die über den Umfang der Trennplatte (41) verteilt sind und die zwischen ihnen Zuführungsdurchgänge (45) des Kühlmittels zum Inneren der Kammer (42) aufweisen, befestigt ist.

2. Untere Einbauten nach Anspruch 1, **dadurch gekennzeichnet,** daß die Mittel (44) für eine mechanische Verbindung aus Profilstangen (50) zum Begrenzen des Druckverlusts des Kühlmittels und zum Ermöglichen der Befestigung und des Schutzes der Führungsrohre (32) gegenüber dem Kühlmittel vor Eindringen derselben in den Raum (36) gebildet sind.

3. Untere Einbauten nach einem der vorangehenden Ansprüche, **dadurch gekennzeichnet,** daß die Kühlmittelzuführleitungen (40) durch den Raum zur Aufteilungskammer (42) hin voneinander in einem Abstand stehen, der gleich dem Anderthalbfachen des Abstandes zwischen den Achsen zweier aneinandergrenzender Kernbrennelemente (9) ist.

4. Untere Einbauten nach einem der vorangehenden Ansprüche, **dadurch gekennzeichnet,** daß wenigstens einige der Führungsrohre (32) auf den Kühlmittelzuführleitungen (40) im Inneren des Raumes (36) befestigt sind.

5. Untere Einbauten nach einem der vorangehenden Ansprüche, **dadurch gekennzeichnet,** daß die Aufteilkammer (42) Schutzhülsen (50) der Handschuhfinger (62), die aus dem Raum (36) durch die Führungsrohre (32) herauskommen und zum Aufnehmen und Führen der Handschuhfinger bis zu deren Eindringen in den Kern (6) durch die Durchgangslöcher (8) der Trägerplatte des Kerns geeignet sind, aufweist.

6. Untere Einbauten nach Anspruch 5, **dadurch gekennzeichnet,** daß jede Schutzhülse (50) eine Leitung (52), die zum Aufnehmen wenigstens eines Handschuhfingers geeignet ist, und Zentriermittel (53, 54) die zum Zentrieren der Leitung im Kühlmitteldurchgangsloch (8) in Bezug auf ein Kernbrennelement derart, daß sich die Leitung vor einem für einen Handschuhfinger in dem Kernbrennelement vorgesehenen Platz befindet, geeignet sind, aufweisen.

7. Untere Einbauten nach Anspruch 6, **dadurch gekennzeichnet,** daß die Zentriermittel einen an der Trägerplatte (7) des Kerns angebrachten Sockel (53) und eine im unteren Teil der Trägerplatte (7) des Kerns befestigte und einen im wesentlichen kreuzförmigen Querschnitt aufweisende Abstandshülse (54) aufweisen.

8. Untere Einbauten nach einem der Ansprüche 6 oder 7, **dadurch gekennzeichnet,** daß wenigstens eine Schutzhülse (50) außerdem eine zwischen dem Sockel (54) und der Trägerplatte (7) des Kerns eingefügte Membrane (55) zum Regeln des Durchflusses des Kühlmittels aufweist.

## Claims

1. Lower internal equipment (34) for a nuclear reactor (1) comprising a vessel (2) withstanding the pressure of a coolant and including a core (6) formed of fuel assemblies (9) carried by a lower support plate (7) formed with passages (8) for the rising coolant, a shell (35) defining an enclosure (36) interposed between said support plate (7) and the bottom of the vessel (37), said shell (35) being formed by a wall (38), ducts (40) conveying coolant to the passages (8) through the wall (38) and the enclosure (36) and having guide tubes (32) passing therethrough for core instrumentation probe glove fingers (62) penetrating into the core through the support plate (7) of said core, characterized in that it further comprises a separation plate (41) fixed to the wall (38), situated below the core support plate (7) for defining a distribution chamber (42) with said support plate, said separation plate (41) being formed with holes (43) connected to the coolant conveying duct (40) and being fixed to the lower support plate (7) of the core by mechanical connection means (44) spaced apart at the periphery of the separation plate (41) and defining together access passages (45) for the coolant towards the inside of said chamber (42).

2. Lower internal equipment according to claim 1, characterized in that the mechanical connection means (44) are formed by bars (50) shaped to limit the head losses of the coolant and for fixing and protecting the guide tubes (32) with respect to said coolant before penetration thereof into the enclosure (36).

3. Lower internal equipment according to any one of the preceding claims, characterized in that the ducts (40) for conveying the coolant through the enclosure to the distribution chamber (42) are spaced apart from each other by a distance equal to 1.5 times the distance separating the axes of two adjacent fuel assemblies (9).

4. Lower internal equipment according to any one of the preceding claims, characterized in that at least some of the guide tubes (32) are fixed to the ducts (44) conveying the coolant into the enclosure (36).

5. Lower internal equipment according to any one of the preceding claims, characterized in that the distribution chamber (42) includes sleeves (50) for protecting the glove fingers (62) leaving the enclosure (36) via the guide tubes (32) adapted for receiving and guiding said glove fingers until they penetrate into the core (6) through the passage holes (8) in said core support plate.

6. Lower internal equipment according to claim 5, characterized in that each protection sleeve (50) includes a duct (52) adapted for receiving at least one glove finger, centering means (53, 54) for centering said duct in the hole (8) for passage of the coolant to an assembly for the duct to be aligned with a glove finger housing formed in said assembly.

7. Lower internal equipment according to claim 6, characterized in that the centering means include a base (53) fixed to the core support plate (7) and a spacer (54) fixed to the lower part of the core support plate (7) and having a substantially cruciform section.

8. Lower internal equipment according to one of claims 6 or 7, characterized in that at least one protection sleeve (50) further includes a diaphragm (55) for adjusting the flow rate of the coolant, inserted between the base (54) and the core support plate (7).

FIG.1.

FIG.2.

FIG.3.

FIG.4.

FIG.5.

FIG.6.

FIG.7.

FIG.8.